# EUROPEAN PATENT APPLICATION

(11) **EP 0 808 598 A1**
(43) Date of publication of application: **26.11.1997**
(21) Application number: 97201531.7
(22) Date of filing: 22.05.1997
(51) Int. Cl.: A47J 31/02

(54) **Apparatus for preparing a consumption unit**

(30) Priority: 22.05.1996 NL 1003184
(71) Applicant: Sara Lee/DE N.V., 3532 AA Utrecht (NL)
(72) Inventor: Dijs, Daniel Albertus Jozef, 3533 VP Utrecht (NL); Alferink, Joost Raymundes, 3039 HC Rotterdam (NL)
(74) Representative: Smulders, Theodorus A.H.J., Ir.

(57) **Abstract**

An apparatus for preparing a consumption unit, more in particular coffee. The apparatus comprises a holder (2) with a container (28) for receiving water and a filter cartridge (4) filled with ground coffee. The filter cartridge is located below the holder and is detachably connected with the holder. The holder (2) and the filter cartridge (4) are of such design that the filter cartridge can be connected with or disconnected from the holder by means of a movement in a direction at least substantially parallel to a bottom surface (22) of the holder (2).

## Description

The invention relates to an apparatus for preparing a consumption unit, more in particular coffee, comprising a holder with a container for receiving water and a filter cartridge filled with a product to be extracted, such as, for instance, ground coffee, the filter cartridge comprising an at least substantially flat bottom wall, a side wall extending from the bottom wall upwards, and an at least substantially flat upper wall located below the holder, and the filter cartridge being detachably connected with the holder.

Such an apparatus is known, inter alia, from Dutch patent application 8301988. The known apparatus comprises a projecting collar designed for cooperation with the wall of the filter cartridge. This collar and the filter cartridge are arranged so as to comprise cooperating snap elements. These snap elements are so designed that the holder and the filter cartridge may be connected with or disconnected from the holder by means of a movement in a direction substantially perpendicular to a bottom surface of the holder. Since in this example the holder is of the cylindrical type, the latter direction coincides with the axial direction of the holder. It is a drawback of such an apparatus that it is difficult to secure the filter cartridge by snapping. In fact, the filter cartridge must be positioned accurately, i.e. parallel to the stated bottom surface of the holder, so as to enable it to be secured by snapping. It is even more difficult to disconnect a used filter cartridge. To this end, a user must manipulate his finger nails between an edge of the collar of the holder and an edge of the filter cartridge to break the snap connection.

The used filter cartridges tend to deform because of the supply of hot water. It is therefore a further problem with the known apparatus is that leakage of a substantially watertight connection between the holder and the filter cartridge may develop when the filter cartridge deforms. In fact, when the filter cartridge and the collar do not properly connect to each other, leakage may develop, with the result that water flows away from the apparatus outside the filter cartridge. This is also possible when the filter cartridge, as a result of the above-described difficult movement, is axially inclined to the stated bottom surface, so that it is not connected with the holder in a properly closing position.

The apparatus according to the invention removes these drawbacks and problems and is characterized in that the filter cartridge can be connected with or disconnected from the holder by means of a movement in a direction at least substantially parallel to a bottom surface of the holder while the upper wall of the filter cartridge is directed at least substantially parallel to the bottom wall of the holder. Surprisingly, it has been found in practice that a movement parallel to the stated bottom surface is much easier for a user. This involves that the filter cartridge will always be accurately and reliably connected with the holder. Disconnecting the holder and the filter cartridge is also easy. In fact, the filter cartridge can be easily gripped to be slid off with respect to the holder. Radially moving a filter cartridge with some force can be easily carried out by exerting a force on a side wall of the filter cartridge. Moreover, the bottom surface can function as a guide when the filter cartridge is connected with or disconnected from the holder. Thus moving the holder and the filter cartridge along each other involves that the relative movement of the holder with respect to the filter cartridge is accurately determined, so that an accurate seal can be obtained. In particular, the holder is suitably provided at the outer side of a bottom surface with a sealing ring, the holder further being provided with clamping means pressing an upper side of the filter cartridge against the sealing ring to obtain a watertight seal between the holder and the filter cartridge.

According to a preferred embodiment the bottom wall comprises a circular groove, the sealing ring being located within the groove, and the thickness of the sealing ring and the depth of the groove being so adjusted to each other that the outer surface of the ring and the outer surface of the bottom wall are at least substantially in one plane.

This has the advantage that the filter cartridge when being connected and disconnected can slide along the outside of the bottom wall without damaging the sealing ring.

According to a preferred embodiment of the apparatus the holder comprises a first and a second finger-shaped support each extending from the bottom wall downwards, the first and the second support each comprising a free end, one bent towards the other, which free ends support a lower side of the filter cartridge and press the filter cartridge against the lower side of the holder. In particular, the finger-shaped support are symmetrically arranged with respect to each other. When only two supports are present, this means that the first and the second support are located on both sides of the filter cartridge. Surprisingly, it has been found in practice that the symmetrical arrangement of the stated supports involves a fully reliable seal between the filter cartridge and the holder. According to an even more advanced embodiment of the apparatus an upper part of respectively the first and the second support is clear of an upper edge of a side of the filter cartridge, so that the filter cartridge can deform and expand at its upper side while hot water is supplied, without the filter cartridge touching the stated upper part of respectively the first and the second support.

The invention will now be explained in more detail with reference to the accompanying drawings, in which
Fig. 1 shows, in cross-section, a first embodiment of the apparatus according to the invention;
Fig. 2A is a bottom view of the filter cartridge of the apparatus of Fig. 1;
Fig. 2B is a top view of the filter cartridge of Fig. 1;
Fig. 2C is a cross-section of the filter cartridge of Fig. 1;
Fig. 3 is a bottom view of the holder of Fig. 1 without filter cartridge;
Fig. 4 shows the apparatus of Fig. 1 placed on a cup for use;
Fig. 5 is a bottom view of a second embodiment of a holder according to the invention;
Fig. 6 is a cross-section taken along the line VI-VI in Fig. 5;
Fig. 7 is a cross-section taken along the line VII-VII in Fig. 5;
Fig. 8 is a bottom view of a third embodiment of a holder according to the invention;
Fig. 9 is a cross-section taken along the line IX-IX in Fig. 8; and
Fig. 10 is a cross-section of a fourth embodiment of a holder according to the invention.

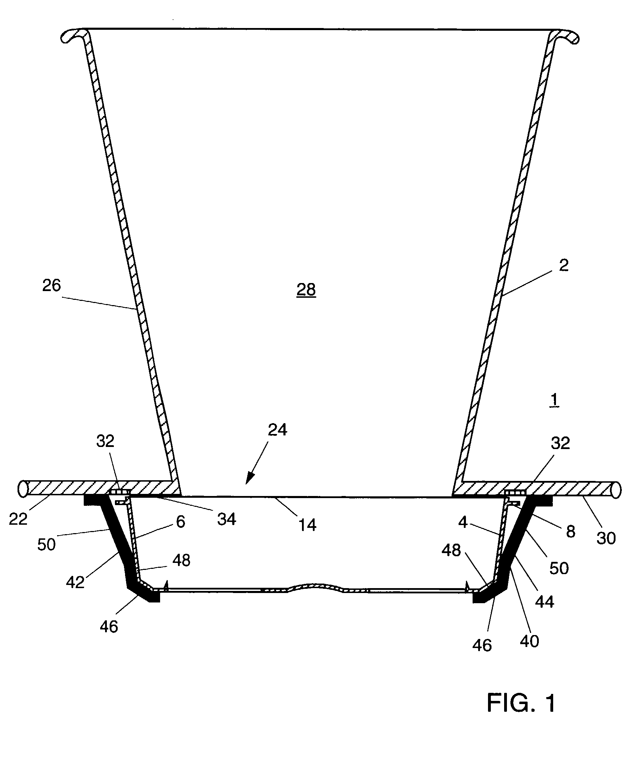

In Fig. 1 an apparatus according to the invention is denoted by reference numeral 1. The apparatus is an assembly comprising a holder 2 and a filter cartridge 4.

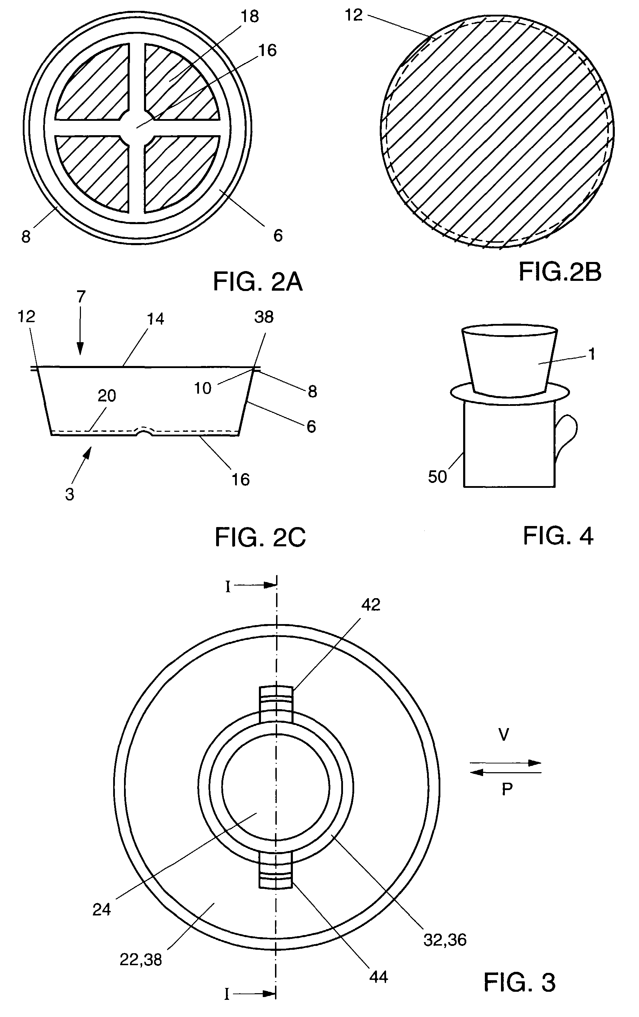

The filter cartridge (see Fig. 2) comprises an at least substantially flat bottom wall 3, a side wall 6 extending from the bottom wall upwards, and an at least substantially flat upper wall 7. The upright side walls are in the form of a circumferential wall 6 which, in its position of use, is provided at its upper side with a flange 8. In the position of use, a part 10 of the circumferential wall extends above the flange 8. Accordingly, at its upper side the circumferential wall 6 forms a circular circumferential edge 12 upright with respect to the flange 8. At its upper side the filter cartridge 4 is closed with a membranous filter 14, which, for instance, may consist of filter paper. The filter 14 then forms the upper wall 7. The membranous filter is sealed to the circumferential edge 12. Since the circumferential edge 12 is relatively thin, a proper seal is obtained by sealing, without the risk that ground coffee contained in the filter cartridge 4 may arrive between the membranous filter and the circumferential edge 12. If this were the case, leakage of the filter cartridge could develop.

At the lower side the filter cartridge has a bottom 16. In the bottom 16 four openings 18 are provided, each opening having the form of a quarter ring. At the inner side of the filter cartridge a second membranous filter 20 rests on the bottom. The bottom 16 and the second membranous filter 20, in combination, form the earlier mentioned bottom wall 3. The bottom wall 3 and the upper wall 7 are directed at least substantially parallel to each other. The filter cartridge as described before comprises an inner space, in which the ground coffee is contained, and which is completely and permanently shut off from the outside world. Accordingly, the filter cartridge is a disposable filter.

The holder has a bottom surface 22, in which, in this example, one passage opening 24 is provided. From the edge of the passage opening 24 an upright side wall 26 extends in an inclined upward direction. The upright side wall 26 forms a container 28 to be filled with water. The holder is provided at the lower side 30 of the bottom surface 22 with a sealing ring 32. The bottom wall has a circular groove 34, the sealing ring being contained in the groove. The thickness of the sealing ring 32 and the depth of the groove 34 are adjusted to each other in a manner such that the outer surface 36 of the bottom surface 22 and the outer surface 38 of the sealing ring 32 are, at least substantially, in one plane. In this example the sealing ring is made of a flexible material, such as xanthoprene.

The holder further comprises clamping means 40, which press the upper side of the filter cartridge against the sealing ring 32 to obtain a watertight seal between the holder and the filter cartridge. In this example these clamping means consist of a first and a second finger-shaped support 42, 44, which extend from the bottom wall 22 downwards. The first and the second support both comprise a free end 46, one bent towards the other. These free ends support the lower side of the filter cartridge and press the filter cartridge against the stated sealing ring. In particular, the circumferential edge 12 of the filter cartridge 4 is pressed against the sealing ring so as to obtain a proper seal.

A lower part 48 of each of the finger-shaped supports 42, 44 butts against the circumferential wall 6 of the filter cartridge 4. Consequently, the filter cartridge is properly positioned with respect to the holder 2. An upper part 50 of respectively the first and the second support, however, is clear of the flange 8 and thus clear of the circumferential wall 6 of the filter cartridge. This has the advantage that at its upper side the filter cartridge, while hot water is supplied, can deform and expand, without the filter cartridge touching the stated upper part of the first and the second support. If this were the case, the filter cartridge could wrench or twist, with the result that, at least a part of the circumferential edge 12, comes to lie apart from the sealing ring 32. Since a space is present between the flange 8 and the finger-shaped supports 42, 44, it is ensured that the filter cartridge 4 and the sealing ring 32 will always remain properly connected together. In this example the fingers are flexible. This means that the lower ends of the fingers can move with respect to each other to take up the stated expansion and deformation of the filter cartridge.

The operation of the system is as follows. First, the filter cartridge 4 is slid under the holder 2 in the direction of the arrow P (see Fig. 3). The upper side of the filter cartridge 4 will then move along the lower side 30 of the bottom wall 22. It therefore applies that the holder and the filter cartridge are of such design that the filter cartridge can be connected with or disconnected from the holder by means of a movement in a direction at least substantially parallel to a bottom wall of the holder while the upper wall of the filter cartridge is directed at least substantially parallel to the bottom wall of the holder. Simultaneously, the finger-shaped supports 42, 44 ensure that the filter cartridge 4, when sliding it inwards, is put in its desired position of use. When the circumferential edge 12 of the filter cartridge butts against the sealing ring 32, the filter cartridge is ready for use. Subsequently, the apparatus 1 can be placed on a cup 50 (see Fig. 4), and the container 28 can be filled with water. This water will flow to the filter cartridge 4 via the passage opening 24. In the filter cartridge the ground coffee is extracted, and the coffee extract will leave the filter cartridge via the openings 18.

After use the filter cartridge can be removed by moving the filter cartridge in the direction of the arrow V (see Fig. 3) with respect to the holder.

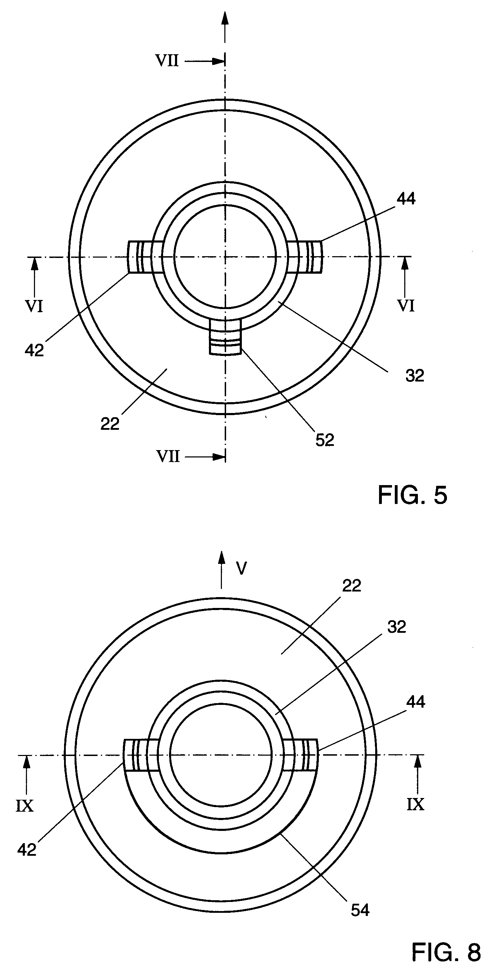

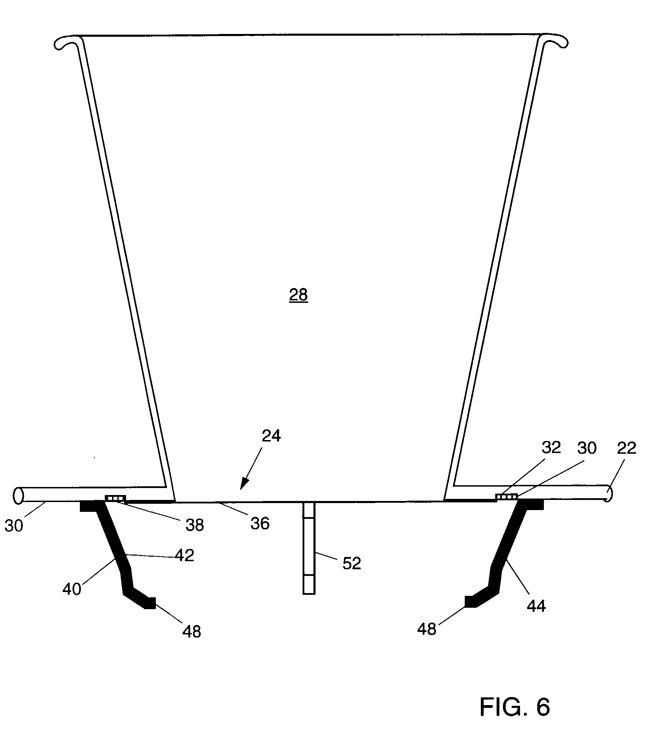

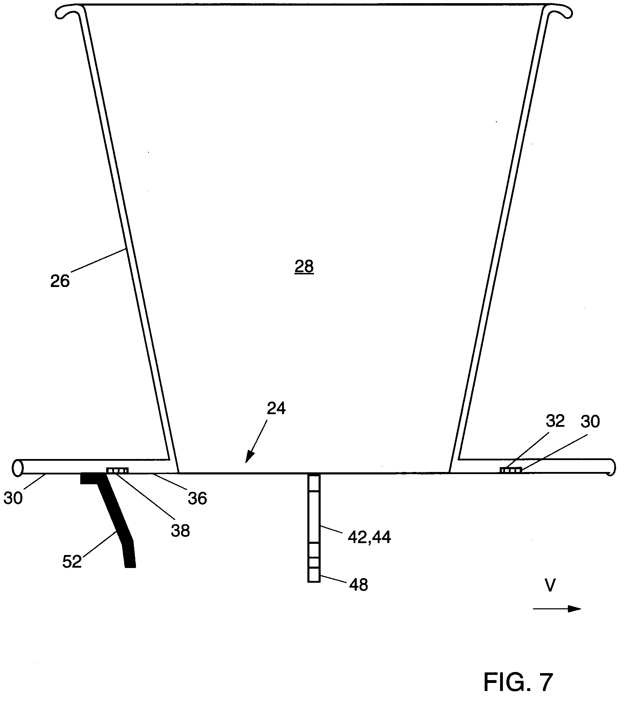

Figs. 5-7 show a second embodiment of the holder, with parts corresponding to Fig. 1 having the same reference numerals. The holder of Fig. 5 is further provided with a stop 52 extending from the bottom wall of the holder downwards. In use, it butts against the circumferential edge 12 of the filter cartridge, so that An apparatus according to claim 6, characterized in that the filter cartridge can only be moved in a direction V away from the stop to disconnect the holder and the filter cartridge from each other (see also Fig. 7). The use of a stop 52 has the advantage that the filter cartridge can be connected with the holder, as described in relation to Fig. 1, but the stop ensures that the filter cartridge is not slid through too far. In other words, the stop 52 ensures that the circumferential edge 12 of the filter cartridge 4 butts accurately against the sealing ring 32.

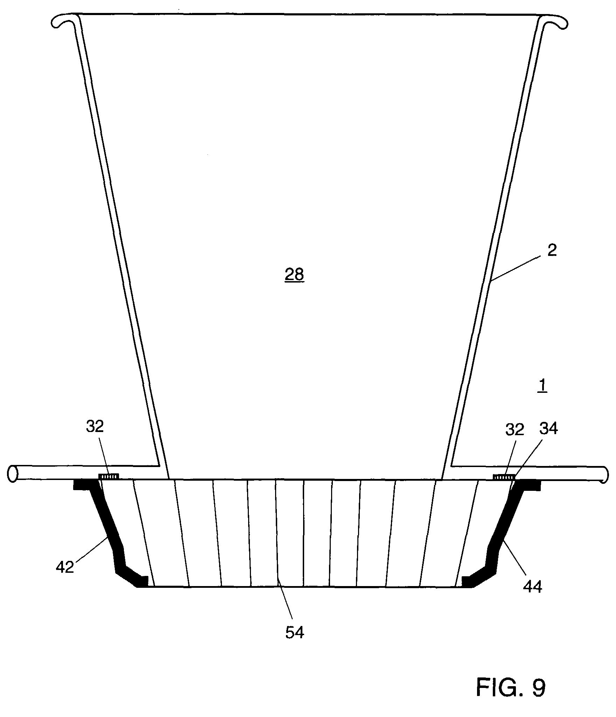

With reference to Figs. 8 and 9 a third embodiment of the holder will be described, with parts corresponding to Fig. 1 having the same reference numerals. In this embodiment the holder also has a stop 54 extending from the bottom surface of the holder downwards. This stop, however, is shaped as a circular collar extending in a semicircle. In its condition of use the circular collar 54 touches the side of the flange 8. The collar 54, however, does not form part of the stated clamping means.

In other words, in this example a proper seal is also secured by the clamping means arranged symmetrically with respect to each other.

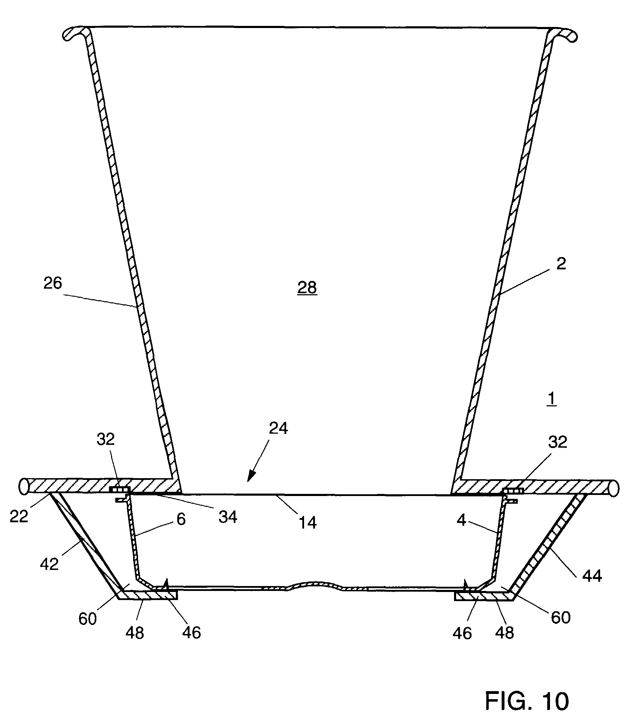

Finally, Fig. 10 shows a fourth embodiment of the holder, with parts corresponding to Fig. 1 having the same reference numerals. In this embodiment the lower part 48 of the fingers is directed substantially horizontally, and an interspace 60 is present between the circumferential wall 6 of the filter cartridge 4 and each of the supports 42, 44. As a result, the actual support of the filter cartridge occurs in the horizontal plane, thus optimally enabling expansion and deformation in the horizontal plane. The circumferential edge 60 is in fact clear of the supports 42, 44.
The invention is by no means limited to the above-described embodiments. Thus, for instance, various fancy forms can be given to the upright side walls 26 of the holder. Such variants are all deemed to fall within the scope

## Claims

1. An apparatus for preparing a consumption unit, more in particular coffee, comprising a holder with a container for receiving water and a filter cartridge filled with a product to be extracted, such as, for instance, ground coffee, the filter cartridge comprising an at least substantially flat bottom wall, a side wall extending from the bottom wall upwards, and an at least substantially flat upper wall located below the holder, and the filter cartridge being detachably connected with the holder, characterized in that the holder and the filter cartridge are of such design that the filter cartridge can be connected with or disconnected from the holder by means of a movement in a direction at least substantially parallel to a bottom wall of the holder while the upper wall of the filter cartridge is directed at least substantially parallel to the bottom wall of the holder.

2. An apparatus according to claim 1, characterized in that the holder is provided at the lower side of the bottom wall with a sealing ring, the holder further being provided with clamping means pressing an upper side of the filter cartridge against the sealing ring to obtain a watertight seal between the holder and the filter cartridge.

3. An apparatus according to claim 2, characterized in that the bottom wall comprises a circular groove, the sealing ring being located within the groove, and the thickness of the sealing ring and the depth of the groove being so adjusted to each other that the outer surface of the ring and the outer surface of the bottom wall are at least substantially in one plane.

4. An apparatus according to claim 2, characterized in that the sealing ring is made of a flexible material.

5. An apparatus according to claim 2, 3 or 4, characterized in that the bottom wall comprises at least one discharge opening, through which water can flow from the container to the filter cartridge, the at least one discharge opening being located within the ring.

6. An apparatus according to claim 1, characterized in that the holder comprises a first and a second finger-shaped support each extending from the bottom wall downwards, the first and the second support each comprising a free end, one bent towards the other, which free ends support a lower side of the filter cartridge and press the filter cartridge against the lower side of the holder.

7. An apparatus according to claim 6, characterized in that the first and the second support are located on both sides of the filter cartridge.

8. An apparatus according to claim 7, characterized in that a lower part of respectively the first and the second support butts against the side wall of the filter cartridge.

9. An apparatus according to any of the preceding claims 6-8, characterized in that an upper part of respectively the first and the second support is clear of an upper edge of a side of the filter cartridge, so that the filter cartridge can deform and expand at its upper side while hot water is supplied, without the filter cartridge touching the said upper part of respectively the first and the second support.

10. An apparatus according to any of the preceding claims 6-8, characterized in that the side wall of the filter cartridge is at least substantially clear of the first and the second support, a lower part of the first and the second support which supports the filter cartridge at its lower side being directed at least substantially horizontally.

11. An apparatus according to any of the preceding claims 6-10, characterized in that the holder is further provided with a stop extending from the bottom wall of the holder downwards and butting against a side wall of the filter cartridge, so that the filter cartridge can only be moved in a direction away from the stop with respect to the holder to disconnect the holder and the filter cartridge from each other.

12. An apparatus according to any of the preceding claims 6-11 and according to claim 4, characterized in that the first and the second support are connected with the bottom wall in a position outside the sealing ring.

13. An apparatus according to claims 11 and 12, characterized in that the stop is connected with the bottom wall in a position outside the sealing ring.

14. An apparatus according to any of the preceding claims, characterized in that the upper wall and the bottom wall of the filter cartridge are each provided with a membranous filter.

15. An apparatus according to any of the preceding claims, characterized in that the upper wall and the bottom wall of the filter cartridge are directed at least substantially parallel to each other.

16. An apparatus according to any of the preceding claims, characterized in that the filter cartridge comprises a completely closed inner space.

17. A holder of the apparatus according to any of the preceding claims.
